# EUROPÄISCHE PATENTSCHRIFT

(11) **EP 1 787 068 B1**
(45) Veröffentlichungstag und Bekanntmachung des Hinweises auf die Patenterteilung: **25.05.2011**
(21) Anmeldenummer: 05785037.2
(22) Anmeldetag: 07.09.2005
(51) Int. Cl.: F24J 2/52

(54) **SCHWIMMENDE SOLARPLATTFORM**
FLOATING SOLAR PLATFORM
PLATE-FORME SOLAIRE FLOTTANTE

(30) Priorität: 08.09.2004 US 935396
(43) Veröffentlichungstag der Anmeldung: 23.05.2007
(73) Patentinhaber: Bogensberger, Burkhard, 6800 Feldkirch (AT)
(72) Erfinder: LAING, Inge, La Jolla, CA 92037 (US); HESSE, Andreas, 57462 Olpe (DE); LAING, Nikolaus Johannes, 71686 Remseck (DE)
(74) Vertreter: Bogensberger, Burkhard
(86) Internationale Anmeldenummer: PCT/EP2005/009593
(87) Internationale Veröffentlichungsnummer: WO 2006/027220

(56) Entgegenhaltungen:
- WO-A-03/032404
- DE-A1- 3 633 172
- US-A- 4 203 426
- US-A- 4 296 731

## Beschreibung

Aus WO 03/032404 und WO 03/034506 sind photovoltaische Kreftwerke bekannt, die eine Anzahl von Konzentratoren enthalten, die in kreisrunden Plattformen zusammengefasst sind, die der Sonne folgend um die Hochachse schwenken. Eine vorteilhafte Lösung sieht einen schwimmenden Ring vor, der die Konzentratoren umgibt. Der schwimmende Ring liegt dabei zwischen drei um den Ring herum angeordneten Rollen und wird so in seiner Lage fixiert.

Der Nachteil dieser Methode besteht darin, dass die drei Rollen im Erdreich fixiert sein müssen, was drei Durchbrüche in der Schicht, z.B. einer Kunststoff-Folie, die den Wasserkörper vom Erdboden trennt, erfordert. Diese Durchbrüche sind nur seiten für längere Zeit zuverlässig abzudichten, sie führen oft zu laufendem Wasserverlust. Außerdem ist durch drei derartige Rollen der Standort der Plattform bleibend festgelegt.

Die Erfindung zeigt eine Lösung, die diese Nachteile nicht aufweist.
Gemäss der Erfindung wird der schwimmende Ring zwischen drei Rollen gefengen, Die Rollen sind auf einem Sockel z.B. aus Beton drehbar befestigt, wobei vorteilhaft zwei Rollen an der Innenseite des Ringes abrollen, während die dritte Rolle an der Außenseite des Ringes angreift. Es ist möglich, dass eine außenseitig angreifende Rolle gleichzeitig an drei Plattformen abrollt, wodurch ein Plattform-Triad entsteht. Die Unterseite des Sockels ist so glatt und eben, dass ein Verschieben der gesamten Einheit von Ringen und Sockel möglich ist.

Damit Ringe von vielen Metern Durchmesser dem geometrischen Kreis exakt folgen, sieht die Erfindung von außen angreifende Rollen vor, die durch geeignete Führungen gegen den Umfang eines Ringes gepresst werden. Eine der innen oder außen am Ring liegenden Rollen wird angetrieben und überträgt das Drehmoment auf den schwimmenden Ring. Vorteilhaft wird hierzu eine von außen angreifende Rolle, die oberhalb des Wasserspiegels angebracht wird, also von Luft umgeben ist, eingesetzt.

Damit die drei Plattformen eines Triads genau synchron um einen bestimmten Winkel weiter gedreht werden können, sieht die Erfindung in einer Ausführungsform eine Kette vor, die z.B. auf dem Ring montiert ist und in die ein Zahnkranz eingreift. An die Stelle von Zahnrädern kann auch ein elektronisch gesteuerter Ring treten, der an Stelle von Zähnen optische oder magnetische Markierungen aufweist.

An Stelle einer Steuerung durch die Sonnenbewegung werden gemäss der vorliegenden Erfindung vorzugsweise berechnete Signale eingesetzt. Die Umsetzung dieser Signale auf die Drehung der Plattform würde bei Reibradantrieb aber an der schlupfbehafteten Übertragung des Drehmomentes vom Reibrad auf die Plattform scheitern. Deshalb ist eine digitale Übertragung zwischen dem Getriebe und der Plattform einzuschalten, wie sie durch Zahnradübertragung möglich ist. Falls die Plattform nicht mit Zähnen versehen werden kann, sieht die Erfindung einen Kranz von Signalgebern auf der Plattform vor. Diese können zum Beispiel reflektierende Plättchen sein, die den Lichtstrahl eines Sensors reflektieren. Bei dieser Methode wird über einen Prozessor die Drehgeschwindigkeit der Plattform errechnet. Übersteigt diese den Sollwert, so wird die Drehzahl des Getriebemotors etwas herabgesetzt, liegt diese unter dem Sollwert, so erfolgt die Erreichung des Sollwertes durch Beschleunigung des Motors.
An die Stelle einer optischen Zählung der mitumlaufenden Signalgeber kann auch ein magnetischer Sensor treten, der die Magnetfeldänderung von ferro- oder permanentmagnetischen Signalgebern registriert. Auch kann die Reflektion akustischer Signale zum Vergleich mit Sollwerten eingesetzt werden.

Für die Fixierung der die Konzentratoren aufnehmenden Tröge innerhalb des schwimmenden Ringes, sieht die Erfindung Kugellager-tragende strangförmige Trennwände vor, die zwischen den Trögen angeordnet sind. Die Plattformen weisen kein mechanisches Strukturelement im Zentrum der Plattform auf. Dort aber erfolgt die Ausleitung des Stromes durch zwei höchstflexible Leitungen, die die tägliche Drehung der Plattform gestatten. Zur Steuerung der Umlaufgeschwindigkeit kann auch ein Sonnenfinder eingesetzt werden.

Es ist vorteilhaft, wenn der Antrieb des schwimmenden Ringes in zeitlich aufeinanderfolgenden Impulsen erfolgen kann. In Abhängigkeit vom zeitlichen Abstand der Impulse erfährt der Auftreffwinkel geringe Abweichungen vom jeweiligen Sollwert. Die Erfindung gleicht diese Abweichungen aus, indem der Fokus der Konzentratorlinse nicht direkt auf die photovoltaische Zelle gerichtet ist, sondern auf die zur Sonne zeigende Fläche eines Glaskörpers, der die Strahlen durch innere Reflexion mischt und bewirkt, dass diese gleichmäßig verteilt auf eine mit dem Glaskörper verbundene Photozelle auftreffen. Diese Anordnung bewirkt, dass auch dann, wenn die Auftreffrichtung des Strahlenkegels von der Soll-Richtung um erhebliche Winkelbeträge von z.B. ± 2º abweicht, dennoch der gesamte Strahlungsstrom zur Photozelle gelangt. Die Größe der realisierbaren Toleranz wird durch das Verhältnis der Größe der zur Sonne weisenden Fläche des Glaskörpers zum Durchmesser der Fokalfläche bestimmt. Diese Anordnung kompensiert auch Fehler, die bei der Umsetzung der Impulse in mechanische Abstände im Getriebeaufbau entstehen, so dass die Toleranzen weit größer sein dürfen als bei sonnenfolgenden Getrieben nach dem Stand der Technik. Dies führt in jedem Falle zu einer erheblichen Verbilligung der Herstellungskosten der Getriebe.

Konzentrierende Solarenergiewandler mit mechanischer Nachführung zur Sonne führen zu hohen Wirkungsgraden, benötigen aber bisher Nachführvorrichtungen von der Präzision der Nachführvorrichtungen von Planetarien.

Die Erfindung zeigt also einen Weg, wie hohe Präzision, die hohe Kosten verursacht, vermeidbar ist. Dazu entkoppelt die Erfindung die Ausrichtung der strahlungsaufnehmenden Komponenten von den strahlungsumwandelnden Komponenten, indem die Konzentration der konzentrierenden Vorrichtung zu einem möglichst kleinen Fokalbereich führt, der auf den Glaskörper gerichtet ist, dessen Eintrittsfläche für den extrem konzentrierten Strahlungsstrom um ein Mehrfaches, zum Beispiel um das zwanzigfache größer ist als die Fläche des Fokalbereiches und dass die in den Glaskörper eintretenden Strahlen auf einen Energiewandler, zum Beispiel eine Photozelle geleitet werden, der den Strahlungsstrom in einen Wärmestrom und einen Elektronenstrom aufteilt. Wenn die Sollposition des Fokalbereiches auf der Eintrittsfläche des Glaskörpers im Zentrum dieser Eintrittsfläche liegt, so erlaubt die Erfindung eine Verschiebung dieses Fokalbereiches in horizontaler und rechtwinklig dazu verlaufender Richtung bis der Fokalbereich den Rand der Eintrittsfläche erreicht. Der senkrecht zu den Sonnenstrahlen verschiebliche Strahl des konzentrierten Strahlungskegels darf also um einen Winkelbetrag, der umso größer ist je kürzer die Fokallänge des Strahlenkegels im Verhältnis zur Erstreckung der Eintrittsfläche in den Glaskörper ist, von der Richtung der Sonnenstrahlen abweichen, ohne dass dadurch Energie des Strahlungsstromes für die Photozelle verloren geht. Das bedeutet, dass auch bei großer Toleranz in der mechanischen Nachführvorrichtung immer eine die verlustfrei Funktion garantierende Genauigkeit erreicht wird, dass also der gesamte konzentrierte Strahlungsstrom genutzt wird.

Die schwimmenden, kreisförmigen Ringe sind von Trennwänden durchzogen, die auf Sehnen verlaufen. In kurzem Abstand voneinander enthalten diese Trennwände Kugellager, durch die an Trögen befestigte Achsstummel gelagert werden, durch die die Tröge schwenkbar sind. Senkrecht zu diesen Trennwänden verlaufen Stahlseile, die so gespannt sind, dass die Kreisform des schwimmenden Ringes gewährleistet ist.

Die Tröge sind so geformt, dass der in den Wasserkörper hineinragende Bereich bei jeder Winkelstellung eine genau vertikale Auftriebskraft erzeugt, so dass kein Drehmoment entsteht. Die Tröge selbst sind konisch ausgebildet, wodurch sie stapelbar werden, was die Transportkosten zwischen dem Herstellungsort und dem Aufstellungsort erheblich herabsetzt. An der zum Wasserkörper weisenden Seite jedes Troges ist eine Auftriebshilfe in Form eines Zylinders mit kreisabschnittförmigem Querschnitt befestigt, die auftriebsbedingte Drehmomente verhindert. Die Tröge sind mit Linsen aus transparentem Kunststoff abgedeckt. Innerhalb eines umschriebenen Kreises sind die Linsen bombiert, der Querschnitt durch die Linse verläuft dort auf einer Kugelfläche, deren Kugelachse den Schnittpunkt der Diagonalen des umschriebenen Quadrates durchsetzt. Der kugelausschnittförmige Bereich trägt refraktive Rillen. Die vier Randbereiche weisen eine Rillung auf, die zur Strahlumlenkung eine innere Reflektion erzeugen.

Die in Längsrichtung der Tröge verlaufenden Kanten der Linsen sind um einen geringen Betrag abgebogen, wodurch sie mit den Wandungen der Tröge um einen geringen Betrag verschiebbar verbunden werden können, so dass sie die Funktion von Strukturelementen übernehmen.

Die Tröge bestehen jeweils aus einer offenen Wanne, die konisch verlaufende Wandungen aufweist, wodurch die Möglichkeit des Stapelns gegeben ist. Der Trog schwimmt in der Wasserschicht und ist um seine horizontale Achse schwenkbar. Zur Vermeidung der Entstehung eines Drehmomentes ist an der zur Sonne weisenden Wandung eine Auftriebshilfe befestigt, die die Rundung des Bodenbereiches fortsetzt. Hierdurch wird der Trog durch Auftrieb getragen, und ein Drehmoment um die Achse vermieden. Das Gewicht der Linse wird durch ein im unteren Bereich des Troges angeordnetes Ausgleichsgewicht kompensiert.

Die Steuerung der azimutahlen Geschwindigkeit und die Funktion des Elevationsgetriebes kann durch aufgezeichnete astronomische Daten erfolgen. Die Erfindung aber zieht eine Sonnennachführungseinheit vor, so dass Azimuth und Elevationssteuerung in Abhängigkeit vom Lauf der Sonne erfolgt. Es hat sich aber gezeigt, dass bei Abblockung der Sonnenstrahlen z.B. durch eine Wolke die Gefahr besteht, dass bei Beendigung der Abblockung der Fokus in die neue Position wandert und auf diesem Wege Schaden z.B. durch Verbrennen der Kabelisolation anrichten kann. Die Erfindung verhindert dies durch einen Hilfsantrieb, der bei Aussetzen der sonnengeführten Wanderung die Fortsetzung der dem Azimut folgenden Wanderung , also die Drehung der Plattform übernimmt. Hierbei gilt das Aussetzen der Speisung des Getriebemotors zum Beispiel durch eine Wolke als Signal für die Einschaltung des Hilfsantriebes.

Zur Verhinderung von Verdunstung der Wasserschicht sieht die Erfindung eine dünne Schicht einer hochsiedenden Flüssigkeit vor, die leichter ist als Wasser, die auch die Bildung von Mückenlarven verhindert. In Regionen, in denen Frost zu erwarten ist, sieht die Erfindung vor, dass dem Wasserkörper ein Alkohol, z.B. Glykol; beigemischt wird. Eine andere Lösung zur Verdunstungsverhinderung, aber auch als Schutz gegen Nachtfröste besteht darin, dass zwischen aufeinanderfolgenden Trögen eine flexible Folie angeordnet ist, die die Wasseroberfläche abdeckt. In Gegenden mit Frostgefahr ist eine wärmeisolierende Folie vorgesehen.

Die Erfindung soll anhand von Figuren beschrieben weren:
- Fig. 1: zeigt den Grundaufbau eines Triads
- Fig. 2: zeigt das Zusammenschachteln von Triads
- Fig. 3: zeigt schematisiert einen Vertikalschnitt durch den Zwickelbereich
- Fig. 4: zeigt die Draufsicht auf ein Triad
- Fig. 5: zeigt ein Triad von unten gesehen
- Fig. 6: zeigt einen Antrieb mit einem Zentralrad und Rollenketten
- Fig. 7: zeigt eine Übertragungsanordnung mit Kettenrädern
- Fig. 8: zeigt eine Anordnung der treibenden und führenden Rollen
- Fig. 9: zeigt den Trog und die Linsen mit Auftriebshilfe
- Fig. 10: zeigt die Endwand eines Troges
- Fig. 11: zeigt die Bestrahlung bei unterschiedlicher Elevation
- Fig. 12: zeigt die Stapelung von Trögen
- Fig. 13: zeigt die Trennwand und die Kupplungselemente
- Fig. 14: zeigt die Kupplungselemente und das Kugellager
- Fig. 15: zeigt die Durchbrüche durch die Trennwand
- Fig. 16: zeigt den Steg unter benachbarten Linsen
- Fig. 17: zeigt den Steg und die Vorsprünge
- Fig. 18: zeigt die Sekundäroptik
- Fig. 19: zeigt den Vergleich zum Stand der Technik
- Fig. 20: zeigt die Abdeckung des Wasserkörpers mit Wärmeausleitung
- Fig. 21: zeigt die gefaltete Abdeckung
- Fig. 22: zeigt einen schwimmenden Abdeckkörper

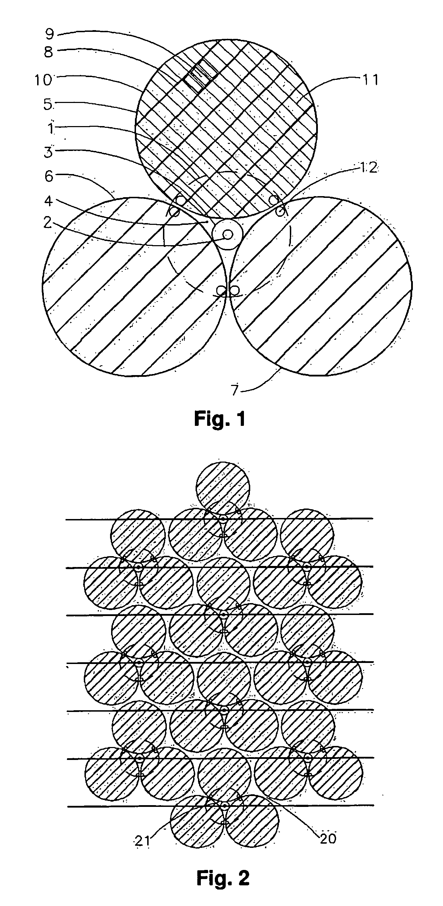

Figur 1 zeigt den Grundaufbau eines Triads. Im Zentrum des Betonsockels 1 befindet sich die Säule 2, auf der für jeden schwimmenden Ring zwei Rollen 12 angeordnet sind. Das als Treibrad 3 ausgebildete Rolle, die die drei Plattformen 5, 6 und 7 antreibt, liegt im Mittelpunkt des Zwickelbereiches 4. Zwischen den Trennwänden 8 sind Tröge 9 um ihre Horizontalachse schwenkbar angeordnet. Zwischen den Trögen 9 verlaufen Metalldrähte 11, durch die die Kreisform des schwimmenden Ringes 10 gewährleistet ist. Die Plattformen sind von schwimmenden Ringen 10 umgeben. Am Abend werden die Linsen gereinigt. Dazu ist auf der zentralen Säule 2 eine Sprühdüse angeordnet, durch die eine im Sockel angeordnete Pumpe gefiltertes Wasser ausströmt. Dabei rotiert die Plattform um 180 Grad.

Figur 2 zeigt eine größere Grundfläche mit Triads. Der Abstand 20 zwischen den Trögen ist so bemessen, dass eine Person überall hingelangen kann. Zwischen den drei Ringen verbleibt ein Zwickelbereich 21.

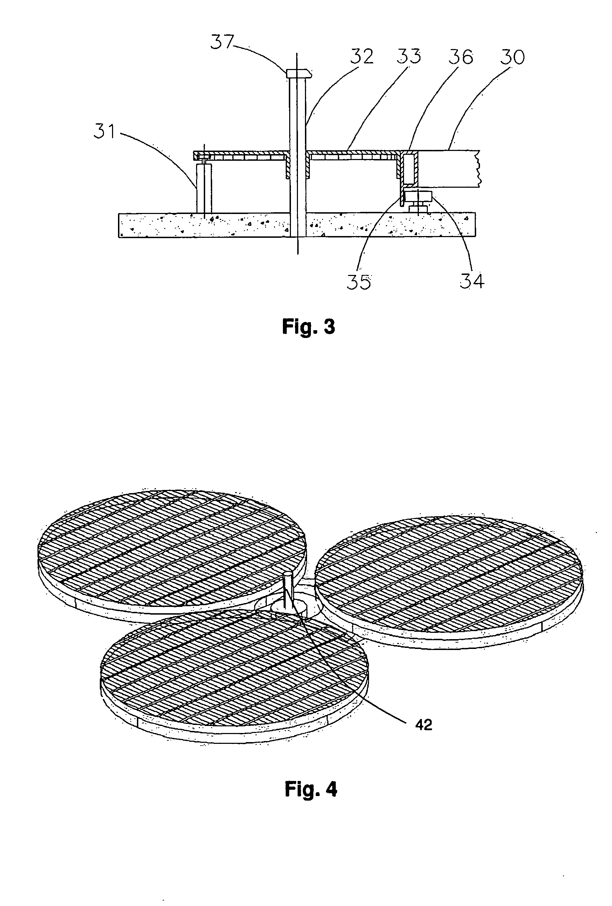

Figur 3 zeigt schematisiert einen Vertikalschnitt durch den Zwickelbereich. Eine der drei Plattformen 30 ist im Schnitt gezeigt. Im Mittelpunkt des Zwickels liegt die Säule 32, auf der die als Treibrad 33 ausgebildete Rolle gelagert ist. Der Antrieb erfolgt über den Unterwasser- Getriebemotor 31. Der Umfang des Treibrades 33 und der Umfang der Plattform 30 sind gezahnt. Zwei der Rollen 34 berühren den schwimmenden Ring 36 am inneren Durchmesser 35, so dass der schwimmende Ring 36 im Abstand zur Säule 32 und zum Umfang hin fixiert ist. Am oberen Ende der Säule 32 ist eine schwenkbare Spritzdüse 37 angeordnet, die abends die Linsen mit gefiltertem Wasser reinigt.

Figur 4 zeigt die Draufsicht auf ein Triad mit der Säule 42.

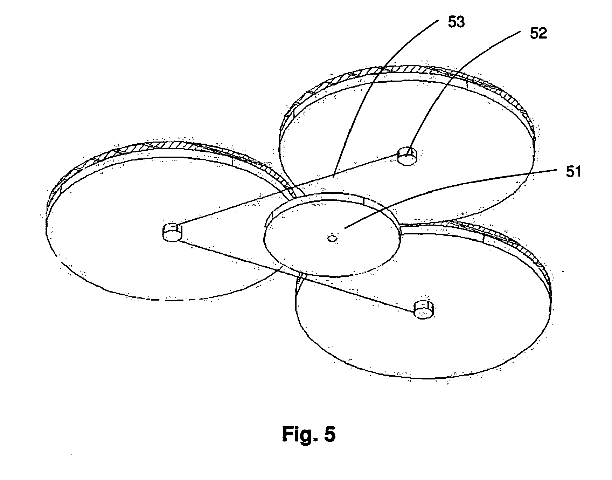

Figur 5 zeigt das gleiche Triad von der Unterseite, wo sich der Betonsockel 51 befindet, dessen Unterseite eben und glatt ist. Die gesamte Einheit kann dadurch auf der Folie, die den Wasserkörper vom Boden trennt, in die gewünschte Position verschoben werden, wobei die Plattformen vom Wasser getragen werden. Jeweils im Zentrum der Plattform treten zwei hochflexible Kabel 52 aus, durch die der Strom in die Verbindungsleitung 53 eingespeist wird.

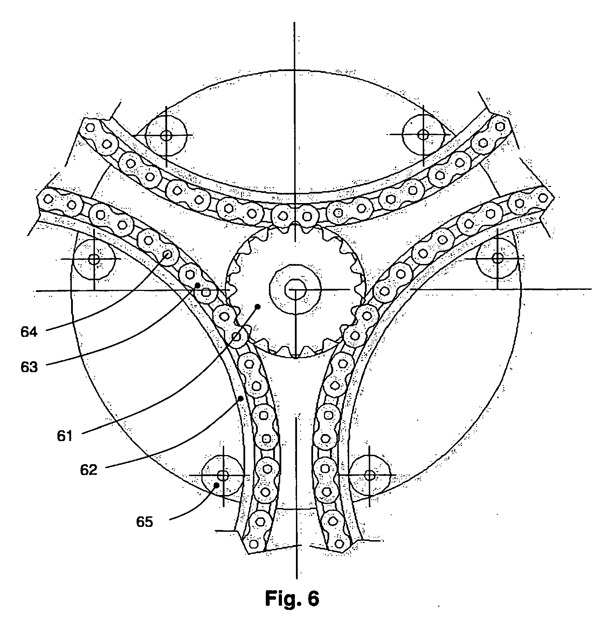

Figur 6 zeigt die Übertragung des Drehmomentes über ein als zentrale Zahnrad 61 ausgebildete Rolle. Auf jedem der schwimmenden Ringe 62 ist eine Rollenkette 63 dadurch befestigt, dass verlängerte Kettenbolzen 64 in Bohrungen des schwimmenden Ringes 62 hineinragen. An der Innenseite der schwimmenden Ringe 62 greifen die stationären, am Betonsockel befestigten Rollen 65 an.

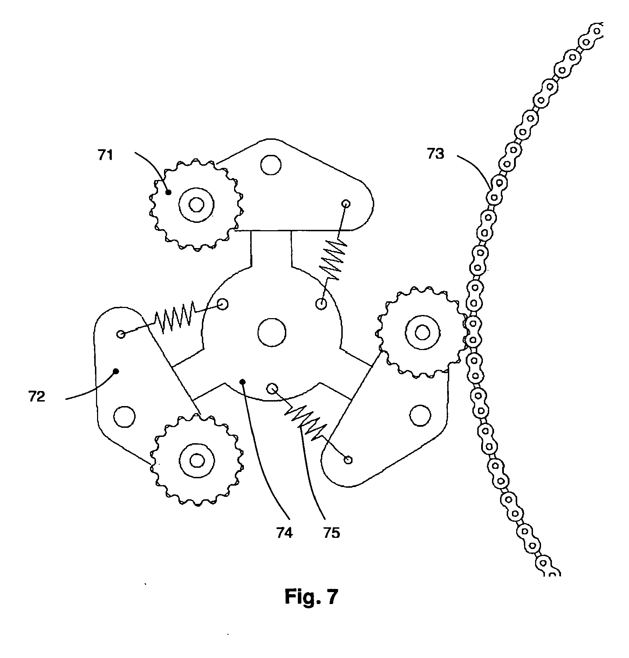

Figur 7 zeigt eine Drehmoment übertragende Konstruktion mit drei als Kettenrädern 71 ausgebildete Rollen. Jedes dieser Räder 71 ist auf einer Wippe 72 gelagert. Die drei Wippen sind an einer zentralen Scheibe 74 schwenkbar befestigt und werden durch Zugfedern 75 gegen die Kette 73 gedrückt.

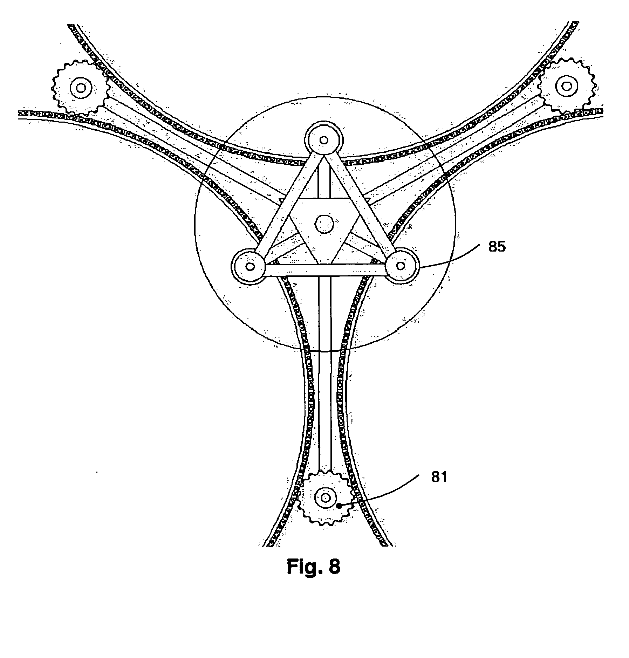

Figur 8 zeigt eine Konstruktion bei der die Distanz der drei Plattformen voneinander durch Rollen 85 gebildet wird. Anstelle der in der Wasserschicht liegenden Rollen verhindern hier die Rollen 85 ein Auswandern der drei schwimmenden Ringe. Der Vorteil dieser Lösung liegt darin, dass alle mechanischen Elemente oberhalb der Wasserschicht liegen. Der Antrieb erfolgt über einen Getriebemotor, der eine der drei als Kettenräder 81 ausgebildeten Rollen antreibt, die den Abstand zwischen den drei Plattformen bestimmen.

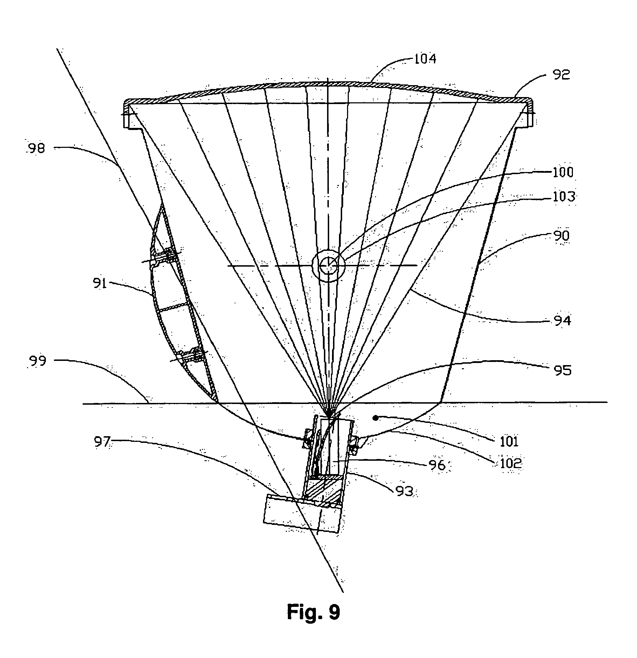

Figur 9 zeigt den Querschnitt durch einen Trog mit der Wanne 90, dem Auftriebskörper 91, der Linse 92 und dem Energiewandler 93. Das Strahlenbüschel 94 erzeugt den Fokalpunkt 95 auf der Eintrittsfläche der Sekundäroptik 96. Das Gehäuse des Energiewandlers 93 schließt mit der Achse der Sekundäroptik einen spitzen Winkel ein. Im Zusammenwirken mit dem Fuß 97 erreicht der Energiewandler 93 auch noch bei extremer Schräglage relativ zur Wasseroberfläche 98 den Wasserkörper, um den bei dem Extremwinkel von 26 Grad anfallenden relativ geringen Abwärmestrom in den Wasserkörper einzuleiten. Der Trog ist um die horizontale Achse 100 schwenkbar. Die Niveaulinie 99 kennzeichnet die Wasseroberfläche bei 90 Grad Elevation. Der ins Wasser eintauchende Bereich 101 bildet zusammen mit dem Auftriebskörper 91 einen stets gleichbleibenden Auftrieb, der dem Gewicht des Troges entspricht. Durch die kreiszylindrischen Bereiche 91 und 102 ändert sich der Abstand zwischen der Wasseroberfläche und der Achse 100 nicht, so dass der Achsstummel 103 weder eine Höhenverschiebung noch ein hydraulisch bedingtes Drehmoment erfährt. Die Linse 92 ist quadratisch und hat eine einbeschriebene Kreisfläche, die auf einem Kugelabschnitt 104 verläuft.

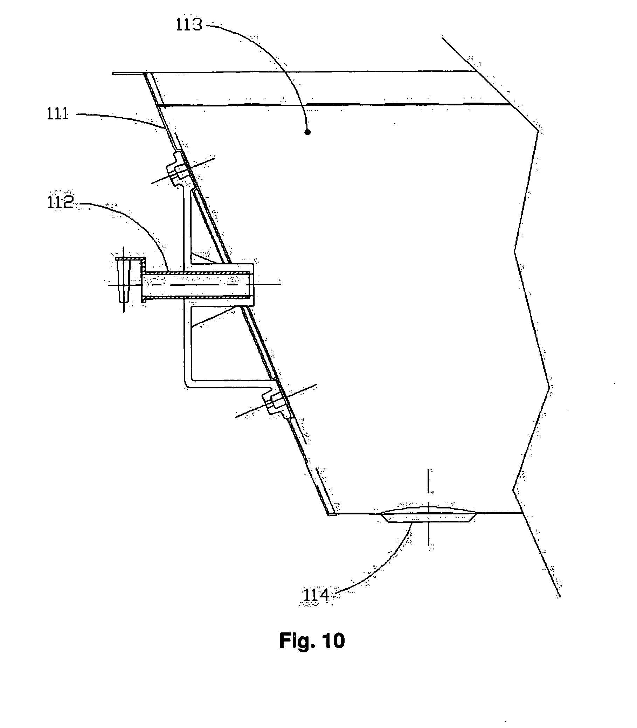

Figur 10 zeigt den Endbereich eines Troges, der bis zu 10 Linsen und Energiewandler aufnimmt. Die Endwandung 111 verläuft schräg zu den Wandungen der Trogwanne, sodass diese ohne Auftriebshilfe 91 a gestapelt werden können. An der Endplatte 111 ist der hohle Achsstummel 112 angeordnet, durch den elektrische Leitungen führen. Der Boden der Blechwandung 113 weist eine Ausprägung 114 auf, in die der Energiewandler 93 eingeschraubt wird.

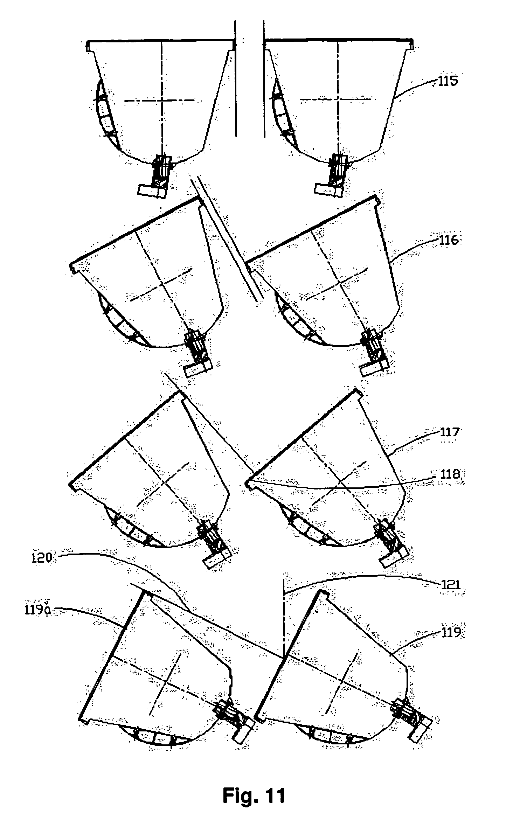

Figur 11 zeigt die Schwenkposition eines Troges 115 bei 90 Grad Sonnenhöhe. Der Trog 116 zeigt die Schwenkung um 28 Grad. Der Trog 117 ist durch den Nachbartrog um einen verschwindend geringen Prozentsatz der Eintrittsfläche 118 beschattet. Der Trog 119 zeigt die Eintrittssituation am Morgen beim Grenzwinkel von 63 Grad zwischen der Einstrahlung 120 und der Vertikalen 121, wo 46% der Linse im Schatten des Nachbartroges 119a liegen. Der Trog erfährt diese Schräglage aber nur für wenige Minuten. Durch eine Sekundäroptik wird der eintretende Strahlungsstrom gleichmäßig über die Fläche der Photozelle ausgebreitet.

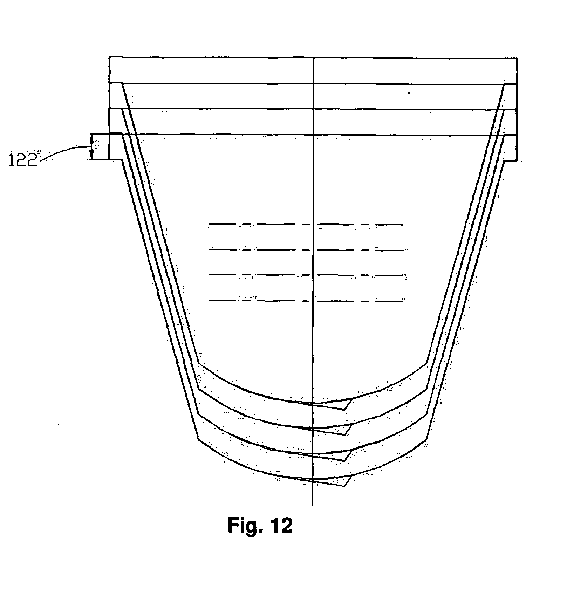

Figur 12 zeigt einen Querschnitt, aus dem ersichtlich ist, dass die Trogkörper für den Transport gestapelt werden können, wobei der Abstand 122 möglichst klein gehalten wird.

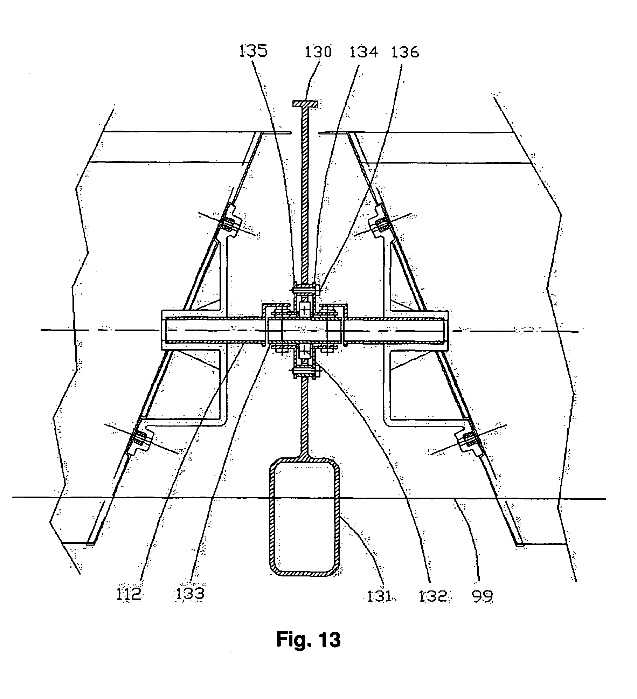

Figur 13 zeigt die Trennwand 130, deren unterer Bereich 131 hohl ist und in die Wasserlinie 99 so weit hineinragt, dass die Trennwand vom Auftrieb getragen wird. Über die Länge der Trennwand sind Durchbrüche angeordnet, durch die eine Hohlachse 133 dringt, die mit den Achsstummeln 112 fluchtet, und die in einem Kunststoff-Kugellager 132 gelagert ist. An den beiden Seiten der Trennwand 130 sind Halter 134 und 135 durch Schrauben 136 miteinander verbunden, die Durchbrüche an der Trennwand durchsetzen.

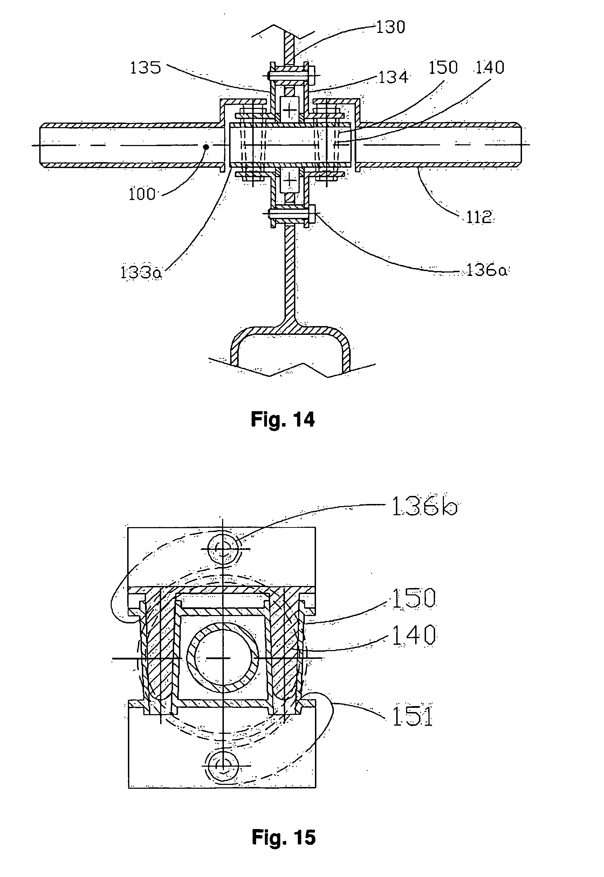

Figur 14 und 15 zeigen den Bereich des Durchbruches der Wandung 130 vergrößert. Die Halterelemente 134 und 135 weisen, wie aus Zeichnung 15 ersichtlich, konische Hülsen 150 auf, in die konische Stifte 140, die an den Achsstummeln 112 befestigt sind, hineinragen. In der Trennwand 130 sind Schlitze 151 angeordnet, durch die die Schrauben 136b hindurchragen, so dass ein Drehmoment um die Hohlachse 133a übertragen wird. Durch diese Anordnung ist es möglich, dass ein Trog senkrecht zur Rotationsachse aus einem Verbund herausgehoben werden kann.

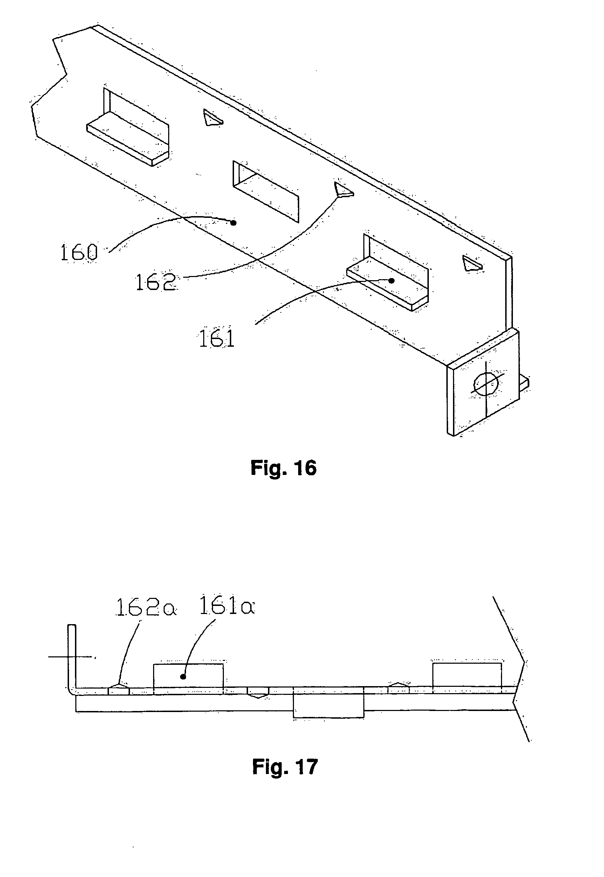

Figur 16 zeigt einen Steg 160. Vier bis fünf Linsen bilden eine Linseneinheit. Zwischen zwei Linseneinheiten ist der Steg 160 angeordnet, der wie aus Figur 17 ersichtlich, Laschen 161, 161a aufweist, auf denen das freie Ende der Linseneinheiten aufliegt.

In Figur 17 sind die Blechspitzen 162 und 162a (aus Fig. 16 erkennbar) gezeigt, durch die ein Gummiköder, der das Eindringen von Regenwasser in den Trog verhindert, in seiner Lage gehalten wird.

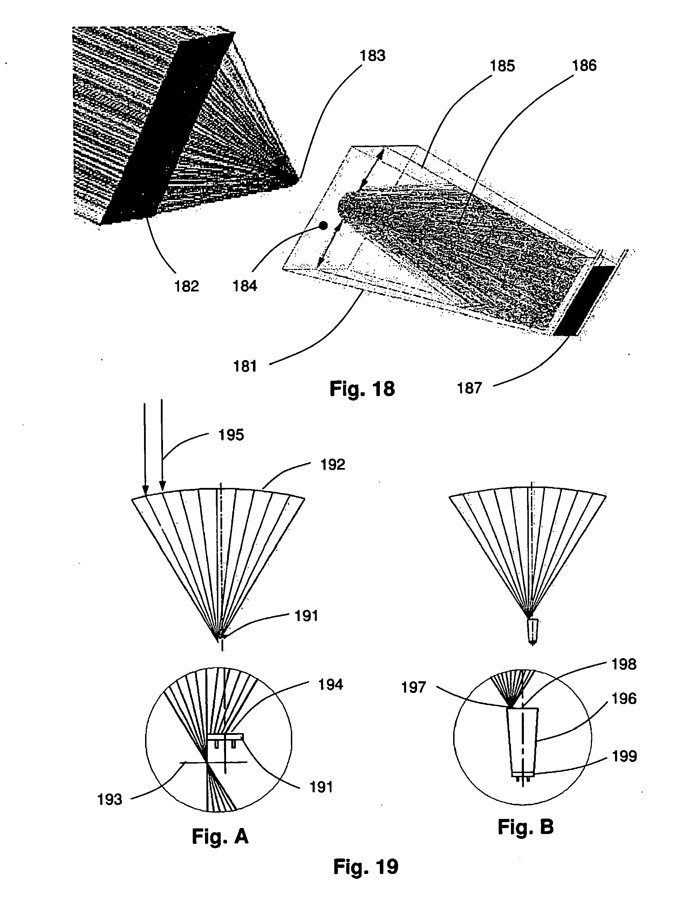

Figur 18 zeigt die Sekundäroptik 181, die von der Konzentratorlinse 182 einen Abstand hat, der genau der Fokallänge entspricht. Aus Darstellungsgründen ist zwischen dem Fokalpunkt 183 und der ihm zugewandten, von der Innenseite gezeigten Fläche 184 der Sekundäroptik 181 ein Abstand gelassen. Die Konzentratorlinse 182 konzentriert die Sonnenbestrahlung auf ca. 8000 Sonnen, der Fokalbereich 183 ist dabei nur wenige Millimeter groß. Die seitlichen Wandungen 185 der Sekundäroptik reflektieren den Strahlungsstrom 186, der am Ende auf die Photozelle 187 auftrifft, die mit der Sekundäroptik optisch verbunden ist. Wenn die Sonnenstrahlen nicht exakt senkrecht auf die Konzentratorlinse 182 auftreffen, wandert der Fokalpunkt 183 auf der - verglichen mit dem Fokalbereich - flächenmäßig viel größeren Eintrittsfläche 184, so dass Winkelabweichungen innerhalb eines Toleranzintervalls von z.B. ± 2 Grad nicht zur Verringerung der Leistung führen, während alle bekannten Systeme mit zweiachsiger Sonnennachführung nur ein Intervall von < 0,1 Grad zulassen. Das große Toleranzintervall erlaubt einen mechanischen Aufbau ohne kostspielige Präzisionsteile.

Figur 19 zeigt die Gegenüberstellung eines erfindungsgemäßen Konzentrators B und eines Konzentrators nach dem Stand der Technik A. In der Fig.19A liegt die Photozelle 191 oberhalb der Fokalebene 193. Eine Winkelabweichung zwischen den Sonnenstrahlen 195 und der Linse 192 führt dazu, dass Strahlen an der Photozelle 191 vorbeigehen und dass gleichzeitig die Photozelle über einen Bereich 194 unbelichtet bleibt, was zu thermischen Spannungen führt. Fig.19B zeigt die erfindungsgemäße Sekundäroptik 196 und den Fokalbereich 197, der um einen erheblichen Betrag aus dem Zentralstrahl 198 ausgewandert ist. Die gesamte Strahlungsenergie tritt in die Sekundäroptik 196 ein und gelangt, wie in Fig. 18 gezeigt, auf die Photozelle 199.

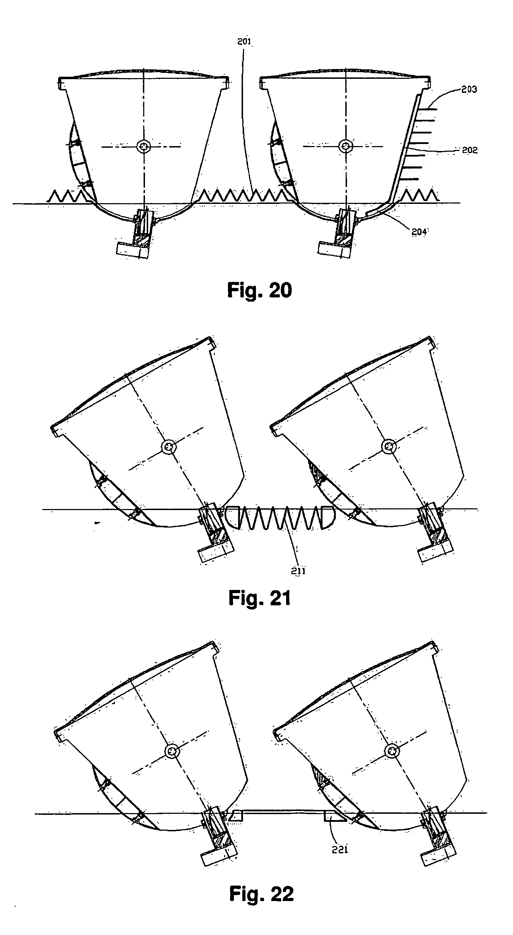

Figur 20 zeigt eine flexible Folie 201, die über die gesamte Länge des Durchmessers des schwimmenden Ringes reicht. Zur Abteilung der Wärme des Wassers dienen Wärmerohre 202 die die Wärme über Rippen 203 auf die Außenluft übertragen. Das Wärmerohr leitet Wärme nur vom unteren Bereich 204 zu den Rippen 203, die umgekehrte Richtung führt zu keinem Wärmetransport, da die Füllung des Wärmerohres gefriert, so dass Minustemperaturen nicht ins Wasser geleitet werden.

Figur 21 zeigt eine Anordnung bei der die Folie 211 zur Vergrößerung der Wasseroberfläche extrem gefaltet ist, um den Wärmeübergang zwischen dem Wasser und der Außenluft zu erhöhen.

Figur 22 zeigt ein schwimmendes Element 221, dass den Raum zwischen zwei Trögen abdichtet.

### BEZUGSZEICHENLISTE

- 1, 51: Betonsockel
- 2, 32, 42: Säule
- 12, 34, 65, 85: Rolle
- 3, 33: als Treibrad ausgebildete Rolle
- 5, 6, 7, 30: Plattform
- 4, 21: Zwickelbereich
- 8, 130, 131, 151: Trennwand
- 9, 90, 115, 116, 117, 119, 119a: Trog
- 11: Metalldraht
- 10, 36, 62: Ring
- 20, 122: Abstand
- 31: Getriebemotor
- 35: innerer Durchmesser Ring
- 37: Spritzdüse
- 52: hochflexibles Kabel
- 53: Verbindungsleitung
- 61: als zentrales Zahnrad ausgebildete Rolle
- 63, 73: Rollenkette
- 64: Kettenbolzen
- 71, 81: als Kettenräder ausgebildete Rollen
- 72: Wippe
- 74: zentrale Scheibe
- 75: Zugfeder
- 91, 91a: Auftriebskörper
- 92, 182, 192: Linse
- 93: Energiewandler
- 94: Strahlenbüschel
- 95, 183: Fokalpunkt
- 96, 181, 184, 185, 196: Sekundäroptik
- 97: Fuß
- 98: Wasseroberfläche
- 100: horizontale Achse
- 99: Wasserlinie
- 101: eintauchender Bereich
- 91, 102: kreiszylindrischer Bereich
- 103, 112: Achsstummel
- 104: Kugelabschnitt
- 111: Endwandung
- 113: Blechwandung
- 114: Ausprägung
- 118, 184: Eintrittsfläche
- 120: Einstrahlung
- 121: Vertikale
- 133, 133a: Hohlachse
- 132: Kugellager
- 134, 135: Halter
- 136, 136b: Schraube
- 150: Hülse
- 140: konischer Stift
- 160: Steg
- 161, 161a: Lasche
- 162, 162a: Blechspitze
- 183, 197: Fokalbereich
- 186: Strahlungsstrom
- 187, 191, 199: Photozelle
- 193: Fokalebene
- 195: Sonnenstrahlen
- 194: unbelichteter Bereich
- 198: Zentralstrahl
- 201, 211: Folie
- 202, 204: Wärmerohr
- 203: Rippen
- 221: schwimmendes Element

## Patentansprüche

1. System zur Erzeugung von Solar-Elektrizität, mit drei rotierenden, kreisförmigen, Solarstrom erzeugenden Ptattformen, die um eine vertikale Achse rotieren, und die zu einem Triad zusammengefasst sind, wobei jede Plattform (5, 6, 7) eine Vielzahl von in einer Wasserschicht schwimmenden, um Achsstummel (103, 112) in einer horizontalen Achse schwenkbaren Trögen (9, 90, 91) mit Photozellen (187, 199) enthält, die mit konzentrierenden Linsen (92, 182, 192) abgedickt sind, und jede Plattform (5, 6, 7) von einem kreisförmigen, schwimmenden Ring (10, 36) umgeben ist, der zwischen drei um den schwimmenden Ring herum angeordneten Rollen (12, 34, 65, 85; 33, 61, 71, 81) liegt und so in seiner Lage fixiert wird, wobei die drei schwimmenden Ringe (10, 36) zwischen sich einen Zwickelbereich (4, 21) einschließen, wobei die Rollen (12, 34, 65, 85; 33, 61, 71, 81) so angeordnet sind, dass wenigstens eine Rolle (12, 34, 65, 85) an der inneren Oberfläche des schwimmenden Ringes (10, 36) angreift, und wenigstens eine Rolle (33, 61, 71, 81) an der äußeren Oberfläche des schwimmenden Ringes (10, 36) abrollt, wobei eine Drehung des Ringes (10, 36) **dadurch** erfolgt, dass eine der Rollen (33, 61, 71, 81) durch einen Motor (31) angetrieben wird und dass diese Rolle (33, 61, 71, 81) ein Drehmoment auf den Ring (10, 36) überträgt, und wobei die an der inneren Oberfläche der schwimmenden Ringe (10, 36) angreifenden Rollen (12, 34, 65, 85) ein Auswandern der drei schwimmenden Ringe (10, 36) verhindern.

2. System nach Anspruch 1, **dadurch gekennzeichnet, dass** unter dem Zwickebereich (4, 21) eine Sockelplatte (1, 51) angeordnet ist, die über eine Antriebsvorrichtung (31) mit den Ringen (10, 36) verbunden ist.

3. System nach Anspruch 1 oder 2, **dadurch gekennzeichnet, dass** zwischen benachbarten schwimmenden Ringen (10, 36) eines Triads Rollen (71, 81) an der äußeren Oberfläche der Ringe (10, 36) abrollen.

4. System nach Anspruch 1 oder 2, **dadurch gekennzeichnet, dass** die drei schwimmenden Ringe (10, 36) ein als zentrales Antriebsrad (33, 61) ausgebildete Rolle berühren, über welches sie synchron gedreht werden.

5. System nach einem der Ansprüche 1 bis 4, **dadurch gekennzeichnet, dass** die Übertragung des Drehmomentes über eine als Zahnkrad (61, 71) ausgebildete Rolle erfolgt, die eine Rollenkette (63, 73) antreibt, die am schwimmenden Ring (10, 36) befestigt ist.

6. System nach einem der Ansprüche 1 bis 5, **dadurch gekennzeichnet, dass** jeder Trog aus zwei Körpern besteht, von denen der erste als langgestreckte rechtwinklige Trogwanne (90) mit kegelig sich erweiternden Wandungen ausgebildet ist, dessen Boden einen Kreiszylinderabschnitt (102) bildet, dessen geometrische Achse (100) in der Nähe der Schwerlinie des Troges verläuft und dessen zweiter Körper (91) als Zylinder mit kreisabschnittförmigem Querschnitt ausgebildet ist, dessen kreiszylinderabschnittförmige Wandung den gleichen Radius aufweist, wie der Boden des ersten Körpers, wobei der zweite Körper an der zur Sonne weisenden Wandung des ersten Körpers so befestigt ist, dass die Kurve des Bodens des ersten Körpers an die Kurve des zweiten Körpers stetig anschließt.

7. System nach Anspruch 6, **dadurch gekennzeichnet, dass** die Wandungen (111) des Troges zur Oberseite hin divergieren, so dass ein Stapeln der Trogkörper möglich ist.

8. System nach Anspruch 6 oder 7, **dadurch gekennzeichnet, dass** der kreiszylindrische Bereich (102) der Außenfläche, der aus dem Boden des ersten Körpers und der gebogenen Wand des zweiten Körpers (91) besteht, so weit in das Wasser eintaucht, dass der Trog vom Auftrieb getragen wird, wobei gegebenenfalls Beschwerungsgewichte im Trog so angeordnet sind, dass der senkrechte Vektor der Auftriebskraft die Schwerachse des Troges schneidet, wodurch die Entstehung eines Drehmomentes um die Schwenkachse des Troges verhindert wird.

9. System nach einem der Ansprüche 1 bis 8, **dadurch gekennzeichnet, dass** innerhalb des schwimmenden Ringes (10, 36) parallel zu einem gedachten Durchmesser vertikal ausgerichtete, streifenförmige Trennwände (130, 131) verlaufen, die Kugellager (132) enthalten, durch die jeweils eine Hohlwelle (133) verläuft, die über Kupplungselemente (135, 136) mit Achsstummeln (112) der angrenzenden Tröge verbunden sind, wobei gegebenenfalls die Trennwände (130, 131 im unteren Bereich hohl sind und so viel Wasser verdrängen, dass sie vom Auftrieb getragen werden.

10. System nach einem der Ansprüche 1 bis 9, **dadurch gekennzeichnet, dass** die Tröge über Hohlachsen (133), durch die elektrische Leitungen führen, miteinander verbunden sind.

11. System nach einem der Ansprüche 1 bis 10, mit einer Konzentratorvorrichtung aus Konzentratorlinsen und photovoltaischen Zellen, **dadurch gekennzeichnet, dass** durch eine Konzentration der eintretenden Strahlen auf mehr als 1000 Sonnen ein sehr kleiner Fokalbereich (183, 197) gebildet wird, der auf der Eintrittsseite eines vorzugsweise quaderförmigen Glaskörpers (181) auftrifft, der mit der photovoltaischen Zelle (187) optisch verbunden ist, wobei die Eintrittsseite (184) des Glaskörpers (181) um mehr als das 10-fache größer ist, als die Fokalfläche.

12. System nach einem der Ansprüche 1 bis 11, **dadurch gekennzeichnet, dass** sich im Zentrum des Zwickelraumes (4, 21) eine Säule (2, 32) befindet, auf der zur Reinigung der Linsen eine Spritzdüse (37) angeordnet ist.

13. System nach einem der Ansprüche 1 bis 12, **dadurch gekennzeichnet, dass** die photovoltaische Zelle (187) durch eine Schicht von einem Kühlkörper getrennt ist, deren thermische Ausdehnung nahe der der photovoltaischen Zelle ist, wobei sich gegebenenfalls unter dem Kühlkörper eine elektrisch isolierende, den Wärmestrom leitende Schicht befindet.

14. System nach einem der Ansprüche 1 bis 13, **dadurch gekennzeichnet, dass** es eine Vorrichtung zur Verhinderung der Wasserverdunstung umfasst, beispielsweise eine Folie, die unter den Trögen verläuft.

## Claims

1. System for generating solar electricity, comprising three rotating, circular platforms which generate solar current, rotate about a vertical axis and are combined to form a triad, each platform (5, 6, 7) containing a multiplicity of troughs (9, 90, 91) which float in a water layer, are pivotable about axle stubs (103, 112) in a horizontal axis and have photocells (187, 199) and which are covered with concentrating lenses (92, 182, 192), and each platform (5, 6, 7) being surrounded by a circular, floating ring (10, 36) which is located between three rollers (12, 34, 65, 85; 33, 61, 71, 81) arranged around the floating ring and is thus fixed in its position, the three floating rings (10, 36) enclosing an interstitial region (4, 51) between them, the rollers (12, 34, 65, 85; 33, 61, 71, 81) being arranged so that at least one roller (12, 34, 65, 85) engages the inner surface of the floating ring (10, 36) and at least one roller (33, 61, 71, 81) rolls on the outer surface of the floating ring (10, 36), a rotation of the ring (10, 36) taking place by virtue of the fact that one of the rollers (33, 61, 71, 81) is driven by a motor (31) and that this roller (33, 61, 71, 81) transmits a torque to the ring (10, 36), and the rollers (12, 34, 65, 85) engaging the inner surface of the floating rings (10, 36) preventing the three floating rings (10, 36) from drifting away.

2. System according to Claim 1, **characterized in that** a baseplate (1, 51) which is connected to the rings (10, 36) via a drive apparatus (31) is arranged under the interstitial region (4, 21).

3. System according to Claim 1 or 2, **characterized in that**, in between adjacent floating rings (10, 36) of a triad, rollers (71, 81) roll on the outer surface of the rings (10, 36).

4. System according to Claim 1 or 2, **characterized in that** the three floating rings (10, 36) touch a roller in the form of a central drive wheel (33, 61), via which they are rotated synchronously.

5. System according to any of Claims 1 to 4, **characterized in that** the transmission of the torque is effected via a roller which is in the form of a gear wheel (61, 71) and which drives a roller chain (63, 73) which is fixed to the floating ring (10, 36).

6. System according to any of Claims 1 to 5, **characterized in that** each trough consists of two bodies, the first of which is in the form of an elongated rectangular tank (90) which has conically widening walls and the bottom of which forms a cylindrical section (102) whose geometrical axis (100) is in the vicinity of the centroidal axis of the trough and whose second body (91) is in the form of a cylinder which has a cross-section in the form of a segment of a circle and whose wall in the form of a segment of a circle has the same radius as the bottom of the first body, the second body being fixed to that wall of the first body which points towards the sun, so that the curve of the bottom of the first body is contiguous with the curve of the second body.

7. System according to Claim 6, **characterized in that** the walls (111) of the trough diverge towards the top so that stacking of the trough bodies is possible.

8. System according to Claim 6 or 7, **characterized in that** the cylindrical region (102) of the outer surface, which region consists of the bottom of the first body and the curved wall of the second body (91), is immersed in the water to such an extent that the trough is supported by the buoyancy, optionally weights for weighting being arranged in the trough so that the perpendicular vector of the buoyancy force intersects the centroid axis of the trough, with the result that the formation of a torque about the pivot axis of the trough is prevented.

9. System according to any of Claims 1 to 8, **characterized in that** vertically oriented, strip-like partitions (130, 131) run parallel to an imaginary diameter within the floating ring (10, 36) and contain ball bearings (132) through which in each case a hollow shaft (133) runs, which hollow shafts are connected via coupling elements (135, 136) to axle stubs (112) of the adjacent troughs, optionally the partitions (130, 131) being hollow in the lower region and displacing an amount of water such that they are supported by the buoyancy.

10. System according to any of Claims 1 to 9, **characterized in that** the troughs are connected to one another via hollow axles (133) through which electric cables run.

11. System according to any of Claims 1 to 10, having a concentrator apparatus comprising concentrator lenses and photovoltaic cells, **characterized in that** a very small focal range (183, 197) is formed by concentration of the entering rays to more than 1000 suns, which focal range impinges on the entry side of a preferably cuboid glass body (181) which is optically connected to the photovoltaic cell (187), the entry side (184) of the glass body (181) being more than 10 times greater than the focal area.

12. System according to any of Claims 1 to 11, **characterized in that** a column (2, 32) on which a spray nozzle (37) is arranged for cleaning the lenses is present in the centre of the interstitial space (4, 21).

13. System according to any of Claims 1 to 12, **characterized in that** the photovoltaic cell (187) is separated by a layer from a cooling element whose thermal expansion is close to that of the photovoltaic cell, an electrically insulating layer conducting the heat flow optionally being present under the cooling element.

14. System according to any of Claims 1 to 13, **characterized in that** it comprises an apparatus for preventing evaporation of water, for example a film which runs under the troughs.

## Revendications

1. Système pour produire de l'électricité solaire, avec trois plates-formes rotatives et circulaires produisant du courant solaire, pouvant tourner autour d'un axe vertical et constituant solidairement une triade, où chaque plate-forme (5, 6, 7) comprend une pluralité de cuvettes (9, 90, 91) flottant dans une couche d'eau, capables d'une rotation grâce à des tourillons (103, 112) disposés suivant un axe horizontal et comprenant des cellules photovoltaïques (187, 199) qui sont couvertes par des lentilles de focalisation (92, 182, 192), où chaque plate-forme (5, 6, 7) est entourée d'un anneau flottant circulaire (10, 36), qui se trouve disposé entre trois galets (12, 34, 65, 85 ; 33, 61, 71, 81) espacés autour de l'anneau flottant pour le bloquer dans sa position, où les trois anneaux flottants (10, 36) définissent entre eux une zone de pincement (4, 21), où les galets (12, 34, 65, 85 ; 33, 61, 71, 81) sont agencés de manière à ce qu'au moins un galet (12, 34, 65, 85) est en prise avec la surface interne de l'anneau flottant (10, 36), où au moins un galet (33, 61, 71, 81) roule sur la surface externe de l'anneau flottant (10, 36), où la rotation des anneaux (10, 36) est assurée par le fait qu'un des galets (33, 61, 71, 81) est entraîné par un moteur (31) et que ce galet (33, 61, 71, 81) transfère un moment de rotation sur l'anneau (10, 36) et où les les galets (12, 34, 65, 85), en prise avec la surface interne de l'anneau flottant (10, 36), empêchent une dérive des trois anneaux flottants (10, 36).

2. Système selon la revendication 1, **caractérisé en ce que**, sous la surface de pincement (4, 21), il y a un plateau-socle (1, 51) qui est en prise par un dispositif d'entraînement (31), avec les anneaux (10, 36).

3. Système selon la revendication 1 ou 2, **caractérisé en ce que**, entre les anneaux flottants voisins (10, 36), il y a une triade de galets (71, 81), roulant sur la surface externe des anneaux (10, 36).

4. Système selon la revendication 1 ou 2, **caractérisé en ce que** les trois anneaux flottants (10, 36) sont en prise avec un galet fonctionnant comme une roue d'entraînement centrale (33, 61), grâce à quoi ils sont entraînés en rotation de manière synchrone.

5. Système selon une des revendications 1 à 4, **caractérisé en ce que** le transfert du moment de rotation se fait par un galet réalisé sous la forme d'une roue dentée (61, 71), qui entraîne une chaîne (63, 73) à galets, qui est fixée à l'anneau flottant (10, 36).

6. Système selon une des revendications 1 à 5, **caractérisé en ce que** chaque cuvette est constituée de deux corps dont le premier est un élément creux allongé rectangulaire (90) avec des parois évasées et un fond réalisé sous la forme d'une portion de cylindre (102) avec un axe géométrique (100) se trouvant au voisinage de la ligne du centre de gravité de la cuvette et dont le second corps (91) est réalisé comme un cylindre ayant un profil en travers d'un segment circulaire, dont la paroi cylindrique ayant ce profil en travers d'un segment circulaire a le même rayon que le fond du premier corps, le second corps étant fixé à la paroi du premier corps faisant face au soleil de manière à ce que la courbure du fond du premier corps corresponde constamment à la courbure du second corps.

7. Système selon la revendication 6, **caractérisé en ce que** les parois (111) des cuvettes divergent en direction du côté supérieur, ce qui permet d'empiler les corps des cuvettes.

8. Système selon la revendication 6 ou 7, **caractérisé en ce que** la portion cylindrique (102) de la surface externe constituée par le fond du premier corps et par la paroi courbe du second corps (91) est suffisamment immergée dans l'eau pour être portée par la poussée de l'eau et, le cas échéant un poids est disposé dans la cuvette pour que le vecteur vertical de la poussée de l'eau coupe l'axe de gravité de la cuvette, ce qui limite l'apparition d'un moment de rotation autour de l'axe de pivotement de la cuvette.

9. Système selon une des revendications 1 à 8, **caractérisé en ce qu'**à l'intérieur de l'anneau flottant (10, 36), il y a des parois verticales de séparation (130, 131) parallèles à un diamètre donné, formant des bandes et comprenant un roulement à billes (132) dans lequel est logé un arbre creux (133) qui est connecté par l'intermédiaire d'éléments de couplage (135, 136) avec les tourillons d'axe (112) qui sont solidaires des cuvettes adjoignantes, les parois de séparation (130, 131) étant, le cas échéant, creuses dans leur partie inférieure, pour être repoussées par l'eau de manière à être portées par elle.

10. Système selon une des revendications 1 à 9, **caractérisé en ce que** les cuvettes sont reliées ensemble par des conducteurs électriques passant par les arbres creux (133).

11. Système selon une des revendications 1 à 10, avec un dispositif de focalisation constitué par des lentilles de focalisation et par des cellules photovoltaïques, **caractérisé en ce que**, grâce à une focalisation du rayonnement incident, plus de 1000 soleils se forment sur une très petite zone focale (183, 197) qui, de préférence, est constituée sur le côté entrée d'un corps en verre rectangulaire (181), couplé optiquement avec la cellule photoélectrique (187), où le côté entrée (184) du corps en verre (181) est plus de 10 fois plus grand que la surface focale.

12. Système selon une des revendications 1 à 11, **caractérisé en ce qu'**au centre de la zone de pincement (4, 21) se trouve une tige (2, 32) sur laquelle est montée une buse de pulvérisation (37) pour le nettoyage des lentilles.

13. Système selon une des revendications 1 à 12, **caractérisé en ce que** les cellules photovoltaïques (187) sont séparées d'un corps froid par une couche, dont la dilatation thermique est proche de celle de la cellule photovoltaïque et où, le cas échéant, une couche électriquement isolante et conductrice de chaleur est agencée sous le corps froid.

14. Système selon une des revendications 1 à 13, **caractérisé en ce qu'**il comprend un moyen pour limiter l'évaporation de l'eau, par exemple, une feuille disposée sous les cuvettes.
